(19) Europäisches Patentamt
European Patent Office
Office européen des brevets

(11) **EP 3 115 761 B1**

(12) **FASCICULE DE BREVET EUROPEEN**

(45) Date de publication et mention
de la délivrance du brevet:
**12.08.2020 Bulletin 2020/33**

(51) Int Cl.:
***G01K 17/20*** *(2006.01)*

(21) Numéro de dépôt: **16177633.1**

(22) Date de dépôt: **01.07.2016**

(54) **PROCÉDÉ DE DÉTERMINATION D'UN DIAGNOSTIC THERMIQUE D'UN BÂTIMENT**

VERFAHREN ZUR ERSTELLUNG EINER THERMISCHEN DIAGNOSE EINES GEBÄUDES

METHOD FOR DETERMINING A THERMAL DIAGNOSIS OF A BUILDING

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **06.07.2015 FR 1556383**

(43) Date de publication de la demande:
**11.01.2017 Bulletin 2017/02**

(73) Titulaire: **COMAP**
**69008 Lyon (FR)**

(72) Inventeurs:
• **SUIRE, Adrien**
**44300 Nantes (FR)**
• **BEAUPERE, Claire**
**44000 Nantes (FR)**
• **BERGER, Sébastien**
**44400 Rezé (FR)**

(74) Mandataire: **Henck, Lilian et al**
**Cabinet Germain & Maureau**
**12, rue Boileau**
**69006 Lyon (FR)**

(56) Documents cités:
**WO-A1-2012/152939**

**Description**

**Domaine technique**

L'invention concerne un procédé de détermination d'un diagnostic thermique par la mesure d'une température intérieure d'un bâtiment et un dispositif pour la mise en œuvre d'un tel procédé.

**Etat de la technique**

La connaissance du comportement thermique d'un bâtiment permet d'évaluer les besoins de rénovation énergétique éventuels, mais aussi d'améliorer le contrôle de la température à l'intérieur de ce bâtiment, notamment pour améliorer le confort des occupants et/ou réduire la consommation énergétique.

Le comportement thermique d'un bâtiment est classiquement évalué par des mesures sur le bâtiment. Ces mesures ne permettent cependant qu'une évaluation très approximative, ne prenant pas forcément en compte toutes les réalités du terrain, et ne peuvent donc conduire qu'à des préconisations très générales

Le document WO2012/152939 A1 décrit un procédé de prévision de la consommation énergétique d'un bâtiment, caractérisé en ce qu'il comprend une étape de prise en compte des échanges thermiques de rayonnement solaire reçu et/ou de convection et/ou de conduction thermique entre le bâtiment et l'environnement extérieur à partir d'un modèle physique mis en œuvre par un calculateur, et en ce qu'il comprend une étape d'apprentissage pour en déduire la valeur des paramètres de modèle physique à partir de mesures effectuées au niveau du bâtiment dans le passé.

Il existe donc un besoin pour un procédé permettant de fournir des préconisations techniques plus fiables et précises.

La présente invention vise à satisfaire, au moins partiellement, ce besoin.

**Résumé de l'invention**

L'invention propose un procédé de détermination d'un diagnostic thermique par la mesure d'une température intérieure d'un bâtiment, le procédé comportant les étapes successives suivantes :

**a)** choix d'un modèle thermique initial établissant, au moyen d'un ensemble de paramètres, une relation théorique entre ladite température intérieure et un ensemble de facteurs d'influence de ladite température intérieure ;
**b)** détermination d'un ensemble de valeurs réelles de ladite température intérieure et desdits facteurs d'influence ;
**c)** optimisation des paramètres du modèle thermique initial par analyse, au moyen d'une méthode d'analyse, dudit ensemble de valeurs réelles, optionnellement filtrées au moyen d'un filtre ;
**d)** en fonction d'une fonction d'évaluation, modification dudit modèle thermique initial et reprise à l'étape c) ou poursuite à l'étape e) ;
**e)** utilisation du modèle thermique obtenu pour réaliser un diagnostic thermique, procédé dans lequel, à l'étape d), la modification du modèle thermique initial résulte d'une comparaison du modèle thermique initial avec un ou plusieurs modèles thermiques disponibles dans des bibliothèques de modèles thermiques auxquels sont associés des caractéristiques du bâtiment de référence.

Comme on le verra plus en détail dans la suite de la description, grâce à l'étape d), un procédé selon l'invention est évolutif et permet d'effectuer un diagnostic précis et fiable, et de préférence de rechercher des préconisations techniques mieux adaptées à la situation réelle. Un procédé selon l'invention peut encore comporter une ou plusieurs des caractéristiques optionnelles préférées suivantes :

- la modification à l'étape d) dépend

  - de la valeur et/ou de l'évolution temporelle d'un ou plusieurs paramètres ; et/ou
  - d'un score représentant la correspondance des valeurs des paramètres du modèle initial optimisé à l'étape c) avec lesdites valeurs réelles ; et/ou
  - de l'ensemble de valeurs réelles utilisé à l'étape c) ; et/ou
  - du modèle thermique initial ;

- à l'étape d), la modification du modèle thermique initial et/ou du filtre et/ou de la méthode d'analyse résulte d'une comparaison du modèle thermique initial et/ou du filtre et/ou de la méthode d'analyse avec un ou plusieurs modèles thermiques et/ou filtres et/ou méthodes d'analyse, respectivement, disponibles dans des bibliothèques de modèles thermiques, de filtres et de méthodes d'analyse, respectivement ;

- De préférence, ladite comparaison s'effectue par comparaison

  - d'une ou plusieurs caractéristiques thermiques du bâtiment étudié, évaluées ou mesurées, et/ou
  - d'une ou plusieurs valeurs réelles de facteurs d'influence et/ou valeurs réelles de la température intérieure mesurées pour le bâtiment étudié, et/ou
  - d'une ou plusieurs évolutions de valeurs réelles de facteurs d'influence et/ou de valeurs réelles de la température intérieure mesurées pour le bâtiment étudié
    avec
  - une ou plusieurs caractéristiques thermiques, et/ou
  - une ou plusieurs plages de valeurs de facteurs d'influence et/ou de valeurs de température intérieure, et/ou
  - une ou plusieurs plages d'évolution de valeurs de facteurs d'influence et/ou de valeurs de température intérieure, relatives à un bâtiment de référence caractérisant chaque modèle thermique et/ou filtre et/ou méthode d'analyse desdites bibliothèques ;

- la bibliothèque de modèles thermiques, ou de filtres, ou de méthodes d'analyse est construite à partir de données obtenues par une pluralité de mises en œuvre d'un procédé selon l'invention ;
- à l'étape d), la modification du modèle thermique initial et/ou du filtre et/ou de la méthode d'analyse résulte d'une comparaison du modèle thermique initial et/ou du filtre et/ou de la méthode d'analyse avec un réseau de neurones établi à partir de données obtenues par une pluralité de mises en œuvre d'un procédé selon l'invention ;
- le modèle thermique initial est choisi dans une base de modèles types en fonction d'une ou plusieurs caractéristiques thermiques dudit bâtiment, par exemple en fonction du nombre et/ou du type d'ouvertures et/ou de l'âge du bâtiment ;
- à l'étape b) et/ou à l'étape d), les valeurs réelles de la température intérieure du bâtiment et des facteurs d'influence dudit ensemble sont mesurées dans une période d'analyse dont le début et la fin sont déterminés en fonction de l'évolution des facteurs d'influence ;
- à l'étape c), les valeurs réelles de la température intérieure du bâtiment et des facteurs d'influence dudit ensemble sont filtrées ;
- le filtre appliqué dépend de l'objet auquel il est appliqué ;
- le filtre appliqué dépend de son efficacité à améliorer les valeurs des paramètres ;
- la modification du filtre dépend de la valeur d'un ou plusieurs paramètres ;
- à l'étape b) et/ou à l'étape d), les valeurs réelles de la température intérieure du bâtiment et des facteurs d'influence dudit ensemble sont mesurées dans une période d'analyse dont la durée est supérieure 1 heure, de préférence supérieure à 3 heures, et/ou inférieure à 24 heures, de préférence inférieure à 12 heures ;
- à l'étape b) et/ou à l'étape d), les valeurs réelles de la température intérieure du bâtiment et des facteurs d'influence dudit ensemble sont mesurées dans une période d'analyse pendant laquelle tous les facteurs d'influence sauf un, voire plusieurs, dit « facteur d'influence actif », sont sensiblement constants ;
- l'étape c) est exécutée plusieurs fois, chaque exécution étant réalisée à partir d'un ensemble de valeurs réelles de la température intérieure du bâtiment et des facteurs d'influence mesurées dans une période d'analyse pendant laquelle tous les facteurs d'influence sauf un, voire plusieurs, dit « facteurs d'influence actifs », sont sensiblement constants, les facteurs d'influence actifs ayant été successivement analysés du fait de l'exécution répétée de l'étape c) comportant au moins 2, de préférence au moins 3, de préférence au moins 4 facteurs d'influence différents, voire tous les facteurs d'influence ;
- les facteurs d'influence actifs comportent au moins 2, de préférence au moins 3, de préférence au moins 4 facteurs d'influence différents parmi la température extérieure, la vitesse du vent, l'orientation du vent, l'ensoleillement, la pression atmosphérique, l'humidité, la présence des occupants dans le bâtiment, la puissance et l'état de fonctionnement du système de chauffage ;
- à l'étape c), notamment pour tenir compte de l'inertie thermique du bâtiment, on compare la température intérieure réelle mesurée à un instant t1 avec une température intérieure théorique obtenue avec des valeurs de facteurs d'influence mesurées à un instant t2 antérieur à tl, le décalage entre t1 et t2 étant variable selon le facteur d'influence considéré ;
- à l'étape b), au moins une partie des facteurs d'influence est de préférence évaluée au moyen de réponses à au moins un questionnaire soumis à des occupants dudit bâtiment, un questionnaire étant de préférence soumis accompagné d'informations résultant d'une mise en œuvre antérieure dudit procédé ;
- à l'étape c), on met en œuvre une méthode d'analyse choisie dans le groupe constitué par l'identification, les statistiques, la méthode des moindres carrés, linéaire ou non, le filtre de Kalman, le filtre particulaire, les réseaux de neurones artificiels et le problème inverse.
- dans un mode de réalisation, la fonction d'évaluation utilisée à l'étape d) impose au moins une reprise à l'étape c), de préférence plus de 1, plus de 2, plus de 3, plus de 5 ou plus de 10 reprise(s) à l'étape c) avant toute poursuite à l'étape e).

- à l'étape e), on génère un rapport comportant un diagnostic exposant

    - l'environnement du bâtiment, en particulier l'environnement urbain ou l'exposition au vent ou au soleil ; et/ou
    - une évaluation de la résistance thermique globale et/ou de l'efficacité des menuiseries et/ou des volets et/ou du chauffage et/ou de la ventilation et/ou des apports de chaleur interne et/ou du thermostat ;

    et/ou des préconisations pour :

    - isoler ou renforcer l'isolation en des emplacements déterminés du bâtiment, par exemple changer les volets ; et/ou
    - modifier le chauffage, par exemple en préconisant des réglages de la puissance de la chaudière et/ou des durées et/ou des plages horaires de chauffage ; et/ou
    - préconiser des changements dans la gestion, par exemple de la ventilation et/ou de l'ouverture des volets et/ou de l'aération naturelle, et/ou des modifications dans l'emplacement du thermostat ; et/ou
    - préconiser l'installation de capteurs et/ou de régulateurs pour affiner le modèle ; et/ou
    - préconiser l'installation de systèmes de contrôle, notamment de contrôle automatique, pour gérer plus efficacement les consommateurs d'énergie et/ou les moyens isolant, comme les volets ; et/ou
    - fournir des informations facilitant la mise en œuvre des préconisations, comme des adresses de prestataires et/ou des fiches techniques et/ou des informations sur les coûts à prévoir.

L'invention concerne également :

- un programme d'ordinateur comprenant des instructions de code de programme pour l'exécution d'une ou plusieurs, de préférence toutes les étapes d'un procédé selon l'invention, lorsque ledit programme est exécuté par un ordinateur,
- un support informatique sur lequel est enregistré un tel programme, par exemple une mémoire ou un CD-ROM, et
- un module de traitement dans lequel est chargé un tel programme et apte à exécuter ledit programme.

## Brève description des figures

D'autres caractéristiques et avantages de l'invention apparaitront encore à la lecture de la description détaillée qui va suivre, et à l'examen du dessin annexé dans lequel :

- la figure 1 représente, schématiquement, un exemple de dispositif selon l'invention ;
- la figure 2 représente l'évolution temporelle de différents facteurs d'influence $F_1$-$F_4$, à savoir le type de temps (pluie, nuageux, clair), la vitesse du vent, l'ensoleillement et la température extérieure, respectivement, et de la température intérieure Ti, t désignant le temps et J1-J5 désignant cinq jours consécutifs ;
- la figure 3 représente le pourcentage du temps de chauffe ($P_{chauffe}$) en fonction de la différence entre la température intérieure et la température extérieure (Ti-Te).

## Définitions

- Un « bâtiment » désigne toute construction dans laquelle on souhaite effectuer un diagnostic thermique. En particulier, un bâtiment peut être un bâtiment habité, comme un appartement ou une maison, un bureau, un entrepôt ou tout autre bâtiment industriel.
- Un « modèle thermique » d'un bâtiment est un modèle qui, au moyen d'un ensemble de « paramètres », établit une relation entre une température intérieure au bâtiment et un ensemble de « facteurs d'influence » de la dite température intérieure.
  La température intérieure peut être en particulier une température mesurée au centre du bâtiment.
- Par « facteur d'influence », on désigne un facteur, variable dans le temps, susceptible d'agir sur la température intérieure.
- Les « facteurs d'influence » comprennent les « facteurs météorologiques » et les « facteurs d'usage » du bâtiment. Les « facteurs météorologiques » sont les facteurs associés à l'environnement auquel le bâtiment est soumis, et en particulier comprennent la température extérieure, la vitesse du vent, la direction du vent, le niveau d'ensoleillement, la pluviométrie, la couverture nuageuse et la pression atmosphérique.
  Les « facteurs d'usage » sont les facteurs liés à l'utilisation du bâtiment. Ils comportent en particulier le nombre d'occupants dans le bâtiment, la nature desdits occupants (femmes, hommes, enfants, personnes âgées, animaux), et l'énergie apportée par le chauffage (réglage de la chaudière) ou les autres sources de chaleur interne (cuisson, appareils ménagers, consommations de veille des appareils électroniques, par exemple).

Les « caractéristiques thermiques » du bâtiment sont les caractéristiques sensiblement constantes dans le temps (à l'échelle des variations de la température intérieure) et qui modifient l'action des facteurs d'influence sur la température intérieure du bâtiment.

Ils peuvent être liés à la structure du bâtiment, comme la nature, la taille, l'orientation et le nombre d'ouvertures (portes, fenêtres simple vitrage, fenêtres double vitrage), la présence d'une Ventilation Mécanique Contrôlée (VMC), le nombre et le volume des pièces, les surfaces et les épaisseurs des murs, les épaisseurs d'isolant sur les murs et/ou sur la toiture, l'existence d'un vide sanitaire ou d'une cave, le nombre d'étages, la hauteur des plafonds, le nombre de radiateurs, les positions des radiateurs.

Ils peuvent être également liés à l'environnement physique du bâtiment, comme l'existence d'un autre bâtiment à proximité immédiate, voire accolé au bâtiment étudié, les caractéristiques de cet autre bâtiment (dimensions, position par rapport au bâtiment étudié), l'environnement urbain ou rural, la présence de végétation et l'ampleur de cette végétation, le relief du terrain, la présence d'une route à proximité, les caractéristiques de cette route, comme le trafic en particulier.

- Sauf indications contraires, par « comportant un », on entend « comprenant au moins un ».

## Description détaillée

Dispositif

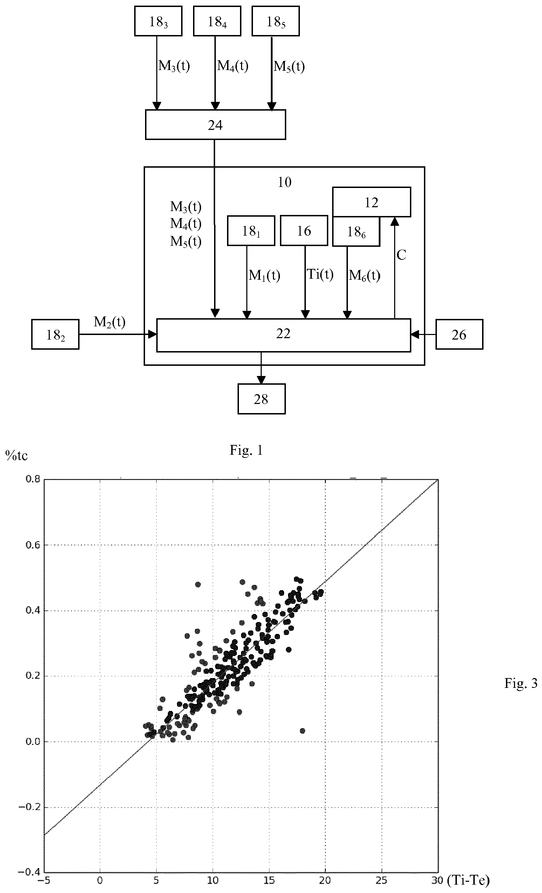

La figure 1 représente un bâtiment 10 comportant une chaudière 12, et un dispositif selon l'invention pour la mise en œuvre d'un procédé selon l'invention.

Le dispositif comporte :

- un thermomètre 16 disposé pour mesurer, à tout instant t, une température intérieure $T_i(t)$ à l'intérieur du bâtiment 10,
- un ensemble de capteurs $18i$, destinés chacun à mesurer, à tout instant t, un facteur d'influence de ladite température intérieure,
- un module de traitement 22.

L'indice « i » est utilisé pour distinguer chacun des capteurs $18_i$ représentés, ainsi que pour désigner les données correspondantes.

Les capteurs peuvent être dans le bâtiment (capteur $18_1$) ou à proximité du bâtiment (capteur $18_2$), ou être à distance, c'est-à-dire typiquement à plus de 10 m du bâtiment. De préférence, un centre météorologique 24 traite les mesures fournies par les capteurs à distance (capteurs $18_3$, $18_4$, $18_5$).

Les capteurs pour mesurer les facteurs d'influence sont connus et comprennent, par exemple, pour les facteurs météorologiques, un anémomètre, un thermomètre, ou un baromètre, ou, pour les facteurs d'usage, un détecteur de présence, un compteur d'évaluation de la puissance de chauffage ou un capteur $18_6$ de mesure du fonctionnement de la chaudière 12.

Dans un mode de réalisation, les facteurs d'usage peuvent être mesurés au moyen d'un téléphone portable de type « smartphone », en particulier pourvu de moyens de géolocalisation ou d'un accéléromètre, ou par analyse d'un emploi du temps des occupants, communiqué par exemple par synchronisation d'un agenda électronique.

Le module de traitement 22 peut être un ordinateur ou tout moyen équivalent apte à recevoir de l'information et à la traiter, par exemple un serveur. Le module de traitement 22 comporte classiquement un processeur programmé pour la mise en œuvre d'un procédé selon invention, une mémoire électronique, notamment pour stocker les données reçues du thermomètre 16 et des capteurs $18_i$, et une interface de communication permettant notamment de communiquer avec le thermomètre 16 et les capteurs 18i. Le module de traitement est préférentiellement placé à distance du bâtiment 10, par exemple à plus 100 m du bâtiment 10.

Le module de traitement 22 est en communication avec le thermomètre 16, qui lui fournit des mesures de la température intérieure $T_i(t)$, et avec les capteurs $18_i$, qui lui fournissent, directement ou par l'intermédiaire du centre météorologique, des mesures $M_i(t)$ sur les facteurs d'influence, respectivement.

La communication peut être unidirectionnelle. Elle peut être également bidirectionnelle, notamment avec la chaudière 12, afin que le module de traitement puisse contrôler la chaudière 12.

La communication peut être filaire ou hertzienne, de préférence hertzienne.

Dans un mode de réalisation préféré, un questionnaire 26 est également utilisé pour interroger les occupants, notamment pour évaluer les caractéristiques thermiques du bâtiment et/ou les facteurs d'usage. Les réponses sont entrées dans le module de traitement.

Procédé

Le module de traitement est de préférence programmé pour mettre en œuvre toutes les étapes d'un procédé selon l'invention et fournir un diagnostic et/ou des préconisations 28.

**A l'étape a),** on choisit un modèle thermique initial qui, de manière générique, définit une relation entre une température intérieure d'un bâtiment et des facteurs d'influence, sans que ce modèle corresponde à un bâtiment spécifique. Dans un mode de réalisation, le modèle thermique initial est basé sur la loi de Fourier de la conduction thermique.

Le modèle thermique initial peut être linéaire ou non.

Compte tenu de l'inertie thermique du bâtiment, les facteurs d'influence agissent avec retard sur la température intérieure. Pour déterminer la température intérieure à un instant déterminé, un modèle thermique utilise donc classiquement des données mesurées antérieurement audit instant.

De préférence, pour déterminer la température intérieure à un instant t1, le modèle thermique initial tient compte des valeurs des facteurs d'influence à plusieurs instants dans une période d'analyse antérieure à l'instant t1.

Le nombre de facteurs d'influence pris en compte par le modèle thermique initial peut être faible, par exemple inférieur à 5, pour accélérer le procédé, ou élevé, par exemple supérieur à 10, pour améliorer la précision du modèle thermique obtenu.

Dans un mode de réalisation préféré, le modèle thermique initial est choisi dans une base de modèles types, un modèle type correspondant de préférence à un type de bâtiment, c'est-à-dire à un bâtiment présentant des caractéristiques thermiques particulières. Par exemple, un modèle type peut être un modèle qui permet d'approximer grossièrement le comportement thermique d'une maison de moins de dix ans, à un étage, d'une surface comprise entre 150 et 200 m$^2$.

Le choix du modèle type peut être guidé par les réponses apportées au questionnaire 26.

A titre d'exemple, le modèle initial suivant, particulièrement simple, peut être utilisé :

$$\text{k1*P}_{\text{chauffe}} + \text{k2*P}_{\text{soleil}} = \text{k3* (Ti} - \text{Te)} + \text{k4*dTi/dt}$$

dans lequel :

- $P_{\text{chauffe}}$ désigne la puissance de chauffage,
- $P_{\text{soleil}}$ désigne la puissance dégagée par l'ensoleillement,
- Te désigne la température extérieure,
- Ti désigne la température intérieure,
- t désigne le temps,
- $k_i$ désigne le paramètre *i*.

Les paramètres $k_i$ dépendent des caractéristiques thermiques du bâtiment. Parfois cette dépendance est connue. Par exemple, k3 est égal à environ ((1/R) + 1/R$_{\text{infil}}$), R désignant le coefficient de résistance thermique du bâtiment et R$_{\text{infil}}$ désignant le coefficient lié aux infiltrations par les menuiseries, et k4 est égal à environ C, C désignant le coefficient caractéristique de l'inertie thermique du bâtiment.

Les paramètres peuvent également être des matrices à plusieurs dimensions. k2 peut être par exemple une matrice avec les valeurs différentes suivant l'orientation et la hauteur du soleil. Des mesures sur le bâtiment ou sur son environnement stable (route, bâtiment adjacent,...) et/ou les réponses au questionnaire permettent ainsi une première évaluation des valeurs de ces paramètres.

Plus précisément, la détermination des valeurs réelles des caractéristiques thermiques du bâtiment peut résulter de mesures. Ces mesures peuvent cependant être difficiles à réaliser, gênantes pour les occupants et/ou coûteuses. Alternativement, ou en complément, il est possible de transmettre un questionnaire 26 aux occupants afin qu'ils transmettent des informations permettant de déterminer les valeurs réelles des caractéristiques thermiques du bâtiment.

La compréhension des questionnaires, de nature technique, peut être cependant difficile. Les questionnaires peuvent être également partiellement ou mal remplis.

Dans un mode de réalisation préféré, un ou plusieurs cycles c)-d) sont effectués avec

- les valeurs des caractéristiques thermiques du bâtiment recueillies avec le questionnaire et/ou mesurées, et
- les valeurs réelles de moins de 5, moins de 3, de préférence d'un unique facteur d'influence, par exemple l'énergie apportée par chauffage, mesurée pendant une période d'analyse de préférence inférieure à un mois, 2 semaines, voire 1 semaine.

Ces premiers cycles permettent avantageusement d'obtenir un modèle thermique grossier, et de générer un premier diagnostic thermique.

Le modèle grossier permet également d'évaluer les caractéristiques thermiques du bâtiment sans mesure ni questionnaire.

De préférence, un deuxième questionnaire, identique ou différent du premier questionnaire et présentant tout ou partie du premier diagnostic thermique est fourni aux occupants du bâtiment. Avantageusement, les inventeurs ont constaté que le deuxième questionnaire est mieux accepté et, de manière générale, mieux rempli que le premier questionnaire. Le deuxième questionnaire permet avantageusement d'affiner le modèle thermique.

Tous les paramètres peuvent cependant être évalués par l'étude de l'impact des facteurs d'influence, comme décrit ci-après.

Le modèle initial susmentionné utilise trois facteurs d'influence : l'ensoleillement, la température extérieure et la puissance du chauffage.

Des informations relatives aux caractéristiques du bâtiment, par exemple mesurées ou fournies par le questionnaire, permettent d'estimer R, C, voire $R_{infil}$, et donc d'accélérer la détermination des valeurs des paramètres k3 et k4.

**A l'étape b),** on détermine un ensemble de valeurs réelles de la température intérieure du bâtiment 10 et de facteurs d'influence qui seront utilisées pour l'étape c) d'optimisation. L'étape b) est indépendante de l'étape a), c'est-à-dire peut être réalisée avant, pendant ou après l'étape a). Elle peut être réalisée exclusivement avant l'étape c). Elle peut être poursuivie au moins en partie pendant l'étape c).

Les valeurs réelles des différents facteurs d'influence et de la température intérieure sont mesurées par les capteurs 18i pendant une période de mesure d'une durée Δt de préférence au moins égale ou supérieure à six semaines. La période de mesure Δt peut correspondre à l'ensemble des valeurs réelles mesurées, appelé « historique ».

De préférence, si les caractéristiques thermiques du bâtiment sont modifiées, par exemple du fait du renforcement de l'isolation thermique, il en est de même de la période de mesure afin que, pendant ladite période de mesure, les caractéristiques thermiques du bâtiment soient constantes. La poursuite du procédé conduit avantageusement à une adaptation du modèle thermique aux nouvelles caractéristiques thermiques du bâtiment.

La fréquence de mesure pour un capteur, de préférence pour chaque capteur, est de préférence au moins égale à 1 mesure par 30 minutes, en particulier pour les facteurs météorologiques. Elle est de préférence supérieure ou égale à 1 mesure par minute pour les facteurs d'usage. De préférence, la fréquence de mesure est déterminée en fonction d'une évaluation du bruit sur lesdites valeurs réelles. Par exemple, la fréquence de mesure de la température intérieure est d'autant plus élevée que le bruit sur les valeurs réelles de la température intérieure est petit. Avantageusement, les valeurs réelles de la température intérieure ainsi filtrées permettent une appréciation plus précise de la variation de température et évite le « parasitage » par les petites variations locales.

On appelle "période d'analyse" l'intervalle de temps pendant lequel les valeurs réelles de la température intérieure du bâtiment et des facteurs d'influence dudit ensemble sont mesurées. Le début et la fin de la période d'analyse sont déterminés en fonction de l'évolution des facteurs d'influence et de la température intérieure. En particulier, une période d'analyse peut être déterminée pour que, pendant ladite période d'analyse, dite "première période d'analyse", seul un facteur d'influence, dit "actif", varie sensiblement.

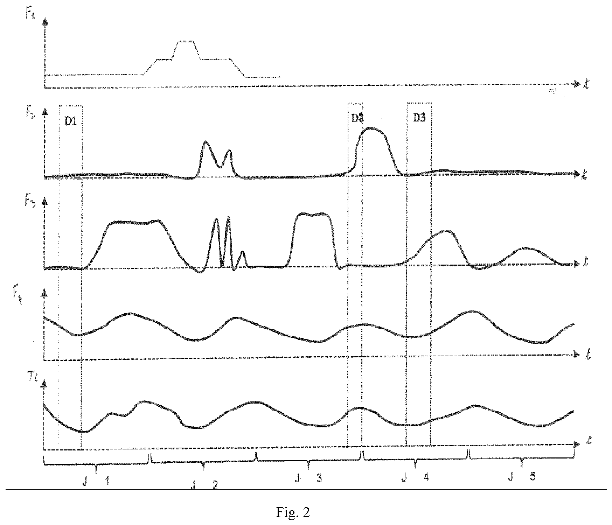

La description de l'étape d) et la figure 2 fournissent des exemples de périodes d'analyse ainsi déterminées.

**L'étape c)** consiste en une optimisation permettant de transformer le modèle thermique initial en un modèle thermique correspondant au bâtiment 10 particulier pour lequel on recherche un modèle thermique, dit « bâtiment étudié ».

L'optimisation consiste à modifier les valeurs des paramètres du modèle thermique initial pour les faire correspondre, le plus possible, à la situation réelle.

La situation réelle est définie par les valeurs réelles de la température intérieure et des facteurs d'influence de l'ensemble déterminé à l'étape b).

Lesdites valeurs réelles peuvent être préalablement filtrées. Le filtrage comporte une opération d'identification du « bruit » (anomalies à filtrer), puis une opération d'extraction de ce bruit de l'ensemble des valeurs réelles. Par exemple, pendant certaines périodes d'analyse, le modèle peut théoriquement se résumer à une relation, par exemple linéaire, entre l'évolution de la température intérieure et un facteur d'influence, l'action des autres facteurs d'influence étant connue, par exemple constante. L'analyse des valeurs réelles à différents instants devrait confirmer cette relation. Les écarts de l'évolution de la température intérieure mesurée par rapport à l'évolution linéaire de la température intérieure calculée par ladite relation peuvent être considérés comme du bruit et filtrés.

L'origine du bruit n'est généralement pas connue. Le bruit peut par exemple résulter de l'action de facteurs d'influence mineurs, non pris en compte dans le modèle thermique initial, par exemple l'état d'ouverture ou de fermeture d'une porte.

De préférence, on recherche le filtre dans une base de filtres en testant une pluralité de filtres de ladite base de filtres.

La correspondance entre les valeurs des paramètres du modèle thermique initial et la situation réelle est classiquement évaluée au moyen d'un score.

Par exemple, avec le modèle susmentionné, le score peut être égal à $k1*P_{chauffe} + k2*P_{soleil} - k3*(Ti - Te) - k4*dTi/dt$. Ce score, appliqué aux valeurs réelles doit être le plus proche possible de zéro pour que la correspondance soit maximale.

Le score peut être aussi, par exemple, la différence entre les températures intérieures théorique, calculée avec le modèle, et réelle.

Toutes les techniques d'optimisation connues peuvent être envisagées.

Dans un mode de réalisation, l'étape c) comporte les étapes suivantes :

c1) définition d'un modèle à tester comme étant le modèle thermique initial ;

c2) test du modèle à tester avec lesdites valeurs réelles et détermination, par traitement des valeurs réelles au moyen d'une méthode d'analyse, d'un score représentant la correspondance du modèle à tester avec lesdites valeurs réelles ;

c3) en fonction du score, modification des valeurs des paramètres du modèle à tester de manière à améliorer le score et reprise à l'étape c2) ou poursuite à l'étape d).

Au début d'un cycle, les valeurs des paramètres et le modèle sont dits « à tester ».

Le test consiste à appliquer lesdites valeurs réelles au modèle à tester, de manière à déterminer un score, puis à modifier les valeurs des paramètres pour améliorer ce score. Dans l'exemple ci-dessus, l'amélioration du score consiste à le faire tendre vers zéro.

L'évaluation du score permet de décider si le cyclage sur les étapes c2) - c3) doit être poursuivi ou stoppé. Par exemple, il peut être décidé de poursuivre le cyclage si la différence entre les températures intérieures théorique et réelle dépasse un premier seuil, par exemple si la différence est supérieure à 5°C et que le premier seuil est, par exemple, de 2°C.

La décision peut également dépendre de scores obtenus lors de cycles précédents et/ou de paramètres aléatoires et/ou du nombre de cycles déjà effectués, par exemple.

En particulier, il est possible qu'en dépit de la répétition des cycles, on ne parvienne pas à un score acceptable. La décision peut être alors de quitter le cyclage. Cette décision peut résulter, par exemple, d'un nombre de cycles supérieur à un nombre maximal prédéterminé.

Un paramètre aléatoire peut également autoriser la poursuite du procédé à l'étape d), bien que le résultat apparaisse insatisfaisant.

Si la décision est la poursuite du cyclage, les valeurs des paramètres testées sont modifiées, ce qui définit un nouveau modèle à tester. Un nouveau cycle est repris à l'étape c2).

La méthode d'analyse utilisée pour modifier les valeurs des paramètres testées peut être une quelconque des méthodes connues : identification, statistiques, méthode des moindres carrés linéaire ou non, filtre de Kalman, filtre particulaire, réseaux de neurones artificiels, problème inverse. Par exemple, la méthode des moindres carrés.

Des méthodes d'analyse sont notamment décrites dans « Handbook-Mathematics » de -N-Bronshtein et al, édité par Springer-Verlag Berlin and Heidelberg GmbH & Co. K, « Beyond-Kalman-Filter-Particle-Applications » de Branko Ristic et al, publié par Artech Print on Demand (January 31, 2004) ou dans « Inverse Problem Theory and Methods for Model parameter estimation » de Albert Tarantola, édité par Society for Industrial and Applied Mathematics.

**A l'étape d),** selon la valeur d'une fonction d'évaluation, le traitement est poursuivi, après modification des conditions d'optimisation, par une nouvelle étape c), ou le procédé se poursuit à l'étape e).

La fonction d'évaluation permet de décider si le cyclage sur les étapes c) - d) doit être poursuivi ou stoppé. La décision peut dépendre du score atteint. Par exemple, il peut être décidé de poursuivre le cyclage si la différence entre les températures intérieures théorique et réelle dépasse un deuxième seuil, par exemple si la différence est supérieure à 5°C et que le deuxième seuil est, par exemple, de 2°C.

La décision peut également dépendre de paramètres aléatoires et/ou du nombre de cycles c) - d) déjà effectués, par exemple. En particulier, il est possible qu'en dépit de la répétition des cycles, on ne parvienne pas à un score acceptable. La décision peut être alors de quitter le cyclage. Cette décision peut résulter, par exemple, d'un nombre de cycles supérieur à un nombre maximal prédéterminé.

Un paramètre aléatoire peut également autoriser la poursuite du procédé à l'étape e), bien que le résultat apparaisse insatisfaisant.

La décision de poursuivre le cyclage peut également dépendre du délai écoulé depuis la dernière modification du modèle thermique initial et/ou du filtre et/ou de la méthode d'analyse. Par exemple, le cyclage vers une nouvelle étape c) peut n'être exécuté que si plus de 1 semaine, plus d'un mois ou plus d'un an s'est écoulé depuis la dernière modification.

Si la décision est la poursuite du cyclage, une modification peut en particulier porter sur :

(a) l'ensemble de valeurs réelles analysé, et/ou

(b) le modèle thermique initial, et/ou

(c) ledit filtre, et/ou

(d) ladite méthode d'analyse.

Une première modification, portant notamment sur le choix du modèle thermique initial et le choix de la méthode d'analyse des paramètres dudit modèle thermique, peut être notamment effectuée après analyse du modèle grossier décrit ci-dessus.

La modification à l'étape d) dépend de préférence :

- de la valeur et/ou de l'évolution temporelle d'un ou plusieurs paramètres ; et/ou
- d'un score représentant la correspondance du modèle initial optimisé à l'étape c) avec lesdites valeurs réelles ; et/ou
- de l'ensemble de valeurs réelles utilisé à l'étape c) ; et/ou
- du modèle thermique initial.

(a) De préférence, l'étape c) est mise en œuvre successivement avec les ensembles de valeurs réelles de ladite température intérieure et de facteurs d'influence mesurées dans des périodes d'analyse différentes, voire disjointes, c'est-à-dire qui ne se superposent pas, même partiellement.

Par exemple, avec le modèle thermique initial fourni ci-dessus à titre d'exemple, une ou de préférence plusieurs premières périodes d'analyse peuvent être définies par des périodes pendant lesquelles la chaudière est éteinte, et donc $P_{chauffe}$ est nul, et il n'y a pas de soleil, par exemple la nuit. Les facteurs d'influence que sont l'ensoleillement et le chauffage sont ainsi « neutralisés ». La température extérieure est alors le seul facteur d'influence qui agit sur la température intérieure. L'analyse de telles premières périodes permet ainsi d'établir des relations entre les valeurs des paramètres k3 et k4.

Une ou de préférence plusieurs premières périodes d'analyse peuvent être définies par des périodes pendant lesquelles la température extérieure est sensiblement constante et il n'y a pas de soleil, par exemple la nuit. Les facteurs d'influence que sont la température extérieure et l'ensoleillement sont « neutralisés ». Le chauffage est alors le seul facteur d'influence qui agit sur la température intérieure. L'analyse de telles premières périodes permet ainsi d'établir des relations entre les valeurs des paramètres k1, k3 et k4.

Une ou de préférence plusieurs premières périodes d'analyse peuvent être définies par des périodes pendant lesquelles la chaudière est éteinte, et donc $P_{chauffe}$ est nul, et la température extérieure est sensiblement constante. Les facteurs d'influence que sont le chauffage et la température extérieure sont « neutralisés ». L'ensoleillement est alors le seul facteur d'influence qui agit sur la température intérieure. L'analyse de telles premières périodes permet ainsi d'établir des relations entre les valeurs des paramètres k2, k3 et k4.

Une ou de préférence plusieurs premières périodes d'analyse peuvent être définies par des périodes pendant lesquelles la température intérieure est sensiblement constante et l'ensoleillement est nul, par exemple parce que les mesures sont effectuées la nuit. Le modèle se résume alors à

$$P_{chauffe} = (k3/k1)* (Ti - Te)$$

La figure 3 représente un ensemble de mesures effectuées pendant de telles premières périodes. Une régression linéaire permet de déterminer une droite dont la pente est égale à (k3/k1).

Le processus peut se poursuivre avec d'autres premières périodes d'analyse.

L'ensemble des relations entre les valeurs des paramètres ainsi établies permet de déterminer finement ces valeurs.

L'utilisation de dites « premières périodes d'analyse » pour évaluer les valeurs des paramètres est particulièrement efficace. En effet, elle permet de filtrer des périodes pendant lesquelles les actions des différents facteurs d'influence sont complexes et difficiles, voire impossibles à modéliser de manière satisfaisante. Par exemple, si toute la période de mesure était utilisée comme période d'analyse, la période d'analyse comporterait de nombreuses périodes dans lesquelles les valeurs réelles ne permettraient pas d'expliquer l'action combinée des facteurs d'influence actifs, notamment parce que des mesures appropriées n'ont pas été effectuées. Par exemple les mesures ne permettent généralement pas de déterminer si une fenêtre est ouverte, ou avec quel degré d'ouverture. Les « premières périodes d'analyse » sont avantageusement des périodes définies pour éliminer les facteurs d'influence non maîtrisés.

De préférence, la durée de toute période d'analyse est supérieure à 1 heure, de préférence supérieure à 3 h, et/ou inférieure à 24 h, de préférence inférieure à 12 h.

La durée d'une « première période d'analyse » peut en particulier dépendre du facteur d'influence actif et, de préférence, de son évolution.

Par exemple, si le facteur d'influence actif est le vent. La période d'analyse peut être initialement d'une durée de 5 heures. Si la température intérieure varie beaucoup, peut-être à cause de facteurs d'influence non identifiés, la durée est de préférence raccourcie, par exemple à 2 heures, pour pouvoir mieux identifier l'impact spécifique du vent. Les autres facteurs d'influence variant alors peu.

Au contraire si la température intérieure a des variations très lentes, la période d'analyse est de préférence allongée, par exemple à 8 heures, afin de disposer d'un ensemble de valeurs réelles plus grand.

Ainsi, la durée d'une période d'analyse, de préférence de toute période d'analyse est de préférence déterminée en fonction d'une analyse statistique des valeurs réelles, et en particulier, de préférence, en fonction de l'évolution temporelle d'un ou plusieurs paramètres. De préférence, pendant une première période d'analyse , tous les facteurs d'influence sauf le facteur d'influence actif, varient dans une plage de variation inférieure à une fraction de leur amplitude maximale de variation pendant une période déterminée, par exemple pendant les 12 heures précédant le début de la période d'analyse envisagée, ou pendant la période de mesure. Ladite fraction, c'est-à-dire la tolérance sur la variation, est de préférence inférieure à 20%. Elle est de préférence déterminée en fonction du facteur d'influence considéré. Par exemple, une variation de moins de 20% de la vitesse du vent peut être considérée comme correspondant à une période pendant laquelle la vitesse du vent est sensiblement constante. Mais une variation de plus de 10% de la température extérieure peut au contraire être considérée comme significative (température extérieure non constante).

De préférence ladite fraction est déterminée par analyse de l'influence des variations du facteur d'influence considéré sur les valeurs des paramètres du modèle. L'analyse peut être en particulier une analyse statistique des valeurs réelles.

Par exemple, le début d'une « première période d'analyse » pour l'ensoleillement (facteur d'influence actif) peut correspondre à un instant to à partir duquel la vitesse du vent varie de moins de 20% et la température extérieure varie de moins de 5% par rapport à leur amplitude maximale respective pendant les 12 heures précédant ledit instant. La fin de cette première période d'analyse peut correspondre au premier instant à partir duquel la vitesse du vent varie de plus de 20% ou la température extérieure varie de plus de 5% par rapport à leur amplitude maximale respective pendant les 12 heures précédant ledit instant to.

Comme représenté sur la figure 2, une première période d'analyse peut par exemple correspondre à un moment où l'ensoleillement était nul (nuit), où le vent était nul, où le ciel était dégagé, sans pluie, et où la température extérieure variait sensiblement (période D1). Une première période d'analyse peut également, par exemple, correspondre à un moment pendant lequel la température extérieure était relativement stable, l'ensoleillement nul et le vent augmentait rapidement (période D2), ou pendant lequel le vent était sensiblement nul, la température extérieure était stable, le temps était clair, et l'ensoleillement augmentait rapidement (période D3). Pendant les périodes DI, D2 et D3, les facteurs d'influence actifs étaient donc la température extérieure, la force du vent et l'ensoleillement, respectivement. Pendant une première période d'analyse, l'évolution de la température intérieure peut ainsi être attribuée au facteur d'influence actif. La valeur du ou des paramètres du modèle associés au facteur d'influence actif peut être ainsi facilement estimée.

La période d'analyse peut être la même quel que soit le facteur d'influence considéré. Elle peut être identique pour les facteurs d'influence et la température intérieure. Cependant, un facteur d'influence actif n'agit pas immédiatement sur la température intérieure du fait de l'inertie thermique du bâtiment. De préférence, la période d'analyse pour un facteur d'influence est donc décalée temporellement, en fonction d'une évaluation de ladite inertie thermique, par rapport à la période d'analyse pour la température intérieure, la période d'analyse pour le facteur d'influence commençant avant la période d'analyse pour la température intérieure. De préférence, l'évaluation de l'inertie thermique, et donc ledit décalage temporel sont affinés à mesure que le modèle thermique est optimisé.

Le décalage temporel est de préférence déterminé en fonction du facteur d'influence considéré. Par exemple, le décalage pour le chauffage sera plus faible que le décalage pour la vitesse du vent, le chauffage agissant plus rapidement que la vitesse du vent sur la température intérieure.

De préférence, le décalage est déterminé par analyse de l'influence des variations du facteur d'influence considéré sur la température intérieure. L'analyse peut être en particulier une analyse statistique des valeurs réelles.

L'étape d) permet de changer la période d'analyse de manière à rendre actifs différents facteurs d'influence lors des exécutions successives de l'étape c). De préférence, cette succession d'exécutions de l'étape c) permet, à l'issue de l'étape d), d'avoir analysé au moins 2, de préférence au moins 3, de préférence au moins 4 facteurs d'influence différents, de préférence tous les facteurs d'influence.

Dans un mode de réalisation préféré, les exécutions successives de l'étape c) se font d'abord à partir de « premières périodes d'analyse ». De préférence, au moins une première période d'analyse est déterminée pour chacun des facteurs d'influence, et en particulier pour chacun des facteurs d'influence météorologiques. L'optimisation de l'étape c), répétée à partir des ensembles de valeurs réelles de ladite température intérieure et desdits facteurs d'influence de chacune de ces premières périodes d'analyse, permet avantageusement d'obtenir rapidement un modèle thermique de qualité correcte.

Certains facteurs d'influence peuvent être corrélés, de sorte qu'il n'existe pas de première période d'analyse dans laquelle un seul de ces deux facteurs d'influence évolue.

De préférence, le cycle des étapes c) et d) est poursuivi en déterminant, à l'étape d), des périodes d'analyse définies de manière que, pendant une période d'analyse, dite « deuxième période d'analyse », tous les facteurs d'influence sauf deux, dits « facteurs d'influence actifs », soient sensiblement constants. L'optimisation de l'étape c), répétée à partir des ensembles de valeurs correspondant permet d'améliorer encore la qualité du modèle thermique.

Le cycle des étapes c) et d) est de préférence ainsi poursuivi en déterminant, à l'étape d), des périodes d'analyse comportant un nombre croissant de facteurs d'influence actifs, de préférence en déterminant des troisièmes, quatrièmes, cinquièmes, etc. périodes d'analyse dans lesquelles tous les facteurs d'influence sauf trois, quatre, cinq etc. sont sensiblement constants.

De préférence, le nombre de facteurs d'influence actifs augmente linéairement, de préférence d'une unité à chaque changement. Un changement du nombre de facteurs d'influence actifs peut être décidé en particulier lorsque le cyclage des étapes c) et d) ne permet plus d'améliorer les résultats, c'est-à-dire de réduire l'écart entre les températures intérieures théorique et réelle.

La modification des périodes d'analyse à l'étape d) contribue considérablement à l'obtention rapide d'un modèle thermique précis.

La modification de l'ensemble de valeurs réelles peut consister en une modification de la période d'analyse, mais aussi, alternativement ou en complément, en une modification de la fréquence de mesure (échantillonnage).

(b) A l'étape d), le modèle thermique initial peut être également modifié.

Un changement de modèle thermique initial est de préférence décidé lorsque les résultats obtenus avec un premier modèle thermique initial sont estimés insuffisants et que cette insuffisance est potentiellement attribuable audit modèle thermique initial.

De préférence, un changement de modèle thermique initial est décidé lorsqu'une ou plusieurs occurrences de l'étape c) ont abouti à des valeurs de paramètres typiques d'un autre modèle thermique initial. Par exemple, le procédé a pu conduire à des valeurs de paramètres correspondant à certaines caractéristiques thermiques caractéristiques d'un bâtiment type, par exemple d'un bâtiment présentant un vide-sanitaire. On remplace alors le modèle thermique initial par le modèle thermique initial de ce bâtiment type. De préférence, on réutilise cependant les valeurs de paramètres déterminées précédemment pour le nouveau modèle thermique initial.

(c) A l'étape d), le filtre peut être également modifié.

De préférence, le filtre peut être modifié afin de rechercher le filtre le plus adapté.

De préférence, on recherche le filtre dans une base de filtres en testant une pluralité de filtres de ladite base de filtres.

Le filtrage par rapport à des valeurs théoriques fournies par un modèle peut cependant conduire à filtrer de manière inappropriée les valeurs réelles. En particulier, les écarts peuvent résulter d'imperfections dans le modèle. Par exemple, pendant certaines périodes d'analyse, le modèle peut théoriquement se résumer à une relation linéaire, entre l'évolution de la température intérieure et un facteur d'influence, mais cette relation susmentionnée peut ne pas être exactement linéaire dans la réalité.

La recherche du filtre est de préférence renouvelée lorsque la période d'analyse à laquelle appartiennent les valeurs réelles analysées n'a jamais été utilisée. Par exemple, un filtre peut être déterminé au regard de valeurs réelles d'une période d'analyse afin d'améliorer le modèle lors de la prise en compte de ces valeurs réelles. Cependant, si l'application de ce filtre à des valeurs réelles d'autres périodes d'analyse similaires conduit à dégrader le modèle, le filtre peut être modifié, voire supprimé. De préférence, le filtre appliqué dépend ainsi de son efficacité à améliorer les valeurs des paramètres.

La modification du filtre pour rechercher le filtre le plus adapté conduit avantageusement à un filtrage qui agit différemment en fonction de l'objet auquel il est appliqué, c'est-à-dire selon qu'il s'applique à la température intérieure ou à un facteur d'influence, et différent selon ledit facteur d'influence.

La modification du filtre peut également dépendre de la valeur d'un ou plusieurs paramètres.

Par exemple, le bruit sur la mesure de température intérieure correspond à des petites variations non corrélées à l'évolution générale. Ces petites variations peuvent résulter, par exemple, d'une ouverture de fenêtre, de porte, ou d'une personne qui touche le capteur de température. Une première évaluation des valeurs des paramètres peut amener à conclure que l'inertie thermique du bâtiment est élevée. Le filtre peut alors être choisi pour filtrer particulièrement la température intérieure, ce qui permet d'éliminer efficacement ce bruit.

(d) A l'étape d), la méthode d'analyse des valeurs réelles peut être également modifiée.

La méthode d'optimisation du modèle est alors évolutive. Notamment, l'invention permet des ruptures pour rechercher une méthode d'optimisation plus adaptée et permettant d'aboutir à un modèle thermique plus proche de la réalité.

Les changements de méthode d'analyse pour évaluer les modifications à apporter aux valeurs des paramètres du modèle, à l'étape c), peuvent être réalisés à intervalles réguliers ou irréguliers, voire de manière aléatoire.

Dans un mode de réalisation, lesdits changements de méthode d'analyse dépendent des progrès effectués entre deux cycles successifs. En particulier, un changement est avantageux lorsque l'écart entre les températures théorique et réelle ne parvient plus à être réduit par modification des paramètres du modèle.

De préférence, la méthode d'analyse mise en œuvre dépend de l'ensemble de valeurs réelles analysé, c'est-à-dire de la période d'analyse. De préférence, la méthode d'analyse dépend de la nature et/ou du nombre de dits « facteurs d'influence actifs », c'est-à-dire des facteurs d'influence qui varient sensiblement pendant la période d'analyse. Dans un mode de réalisation, des changements de la méthode d'analyse sont donc effectués suite à une modification d'une période d'analyse.

Par exemple, si un seul facteur d'influence $F_1$ est variable pendant la période d'analyse, l'ensemble des valeurs réelles mesurées sera constitué de couples de valeurs réelles ($F_1$, Ti), mesurés à différents instants pendant la période d'analyse. Une analyse du nuage de points correspondant par la méthode des moindres carrés permettra d'établir une valeur pour un paramètre reliant $F_1$ et Ti. Si seuls deux facteurs d'influence sont variables pendant une période d'analyse, la méthode d'analyse sera par exemple la méthode du problème inverse. De préférence, la méthode d'analyse mise en œuvre dépend des caractéristiques thermiques du bâtiment et/ou du modèle thermique initial, et en particulier des facteurs d'influence pris en compte dans le modèle thermique initial.

Par exemple, lors d'une première occurrence de l'étape c), la méthode d'analyse dite « des moindres carrés » peut être utilisée pour trouver une valeur d'un paramètre mettant en relation deux facteurs d'influence. Lors d'une deuxième occurrence, la méthode d'analyse dite « du problème inverse » peut être mise en œuvre.

Les méthodes mises en œuvre pour modifier les valeurs des paramètres sont de préférence choisies parmi les méthodes suivantes : identification, statistiques, méthode des moindres carrés linéaire ou non, filtre de Kalman, filtre particulaire, réseaux de neurones artificiels et problème inverse.

De préférence, la méthode d'analyse mise en œuvre dépend de l'ensemble de valeurs réelles déterminé à l'étape b) et/ou du modèle thermique initial et/ou du score permettant d'évaluer l'efficacité de l'optimisation.

De préférence, la modification du modèle thermique initial et/ou du filtre et/ou de la méthode d'analyse résulte d'une comparaison du modèle thermique initial et/ou du filtre et/ou de la méthode d'analyse avec un ou plusieurs modèles thermiques et/ou filtres et/ou méthodes d'analyse, disponibles dans des bibliothèques de modèles thermiques, de filtres et de méthodes d'analyse, respectivement.

De préférence, une bibliothèque de modèles thermiques, ou de filtres, ou de méthodes d'analyse comporte un ensemble de modèles thermiques et/ou filtres et/ou méthodes d'analyse auxquels sont associés des caractéristiques de bâtiments dits « de référence ». Un bâtiment de référence peut être un bâtiment réel ou un bâtiment théorique.

Par exemple, un modèle thermique peut être associé à la présence d'un plancher chauffant, lui-même caractérisé, par exemple, par une évolution de la température intérieure inférieure à 0,5°C par heure lors de la mise en marche du chauffage. Si l'évolution de la température intérieure dans le bâtiment étudié est inférieure à 0,5°C par heure lors de la mise en marche du chauffage, le module de traitement peut en déduire que le bâtiment étudié comporte un plancher chauffant et sélectionner, dans la bibliothèque des modèles thermiques, un ou plusieurs modèles correspondant.

Selon un deuxième exemple, un filtre peut être initialement choisi afin de sélectionner, pour chaque facteur d'influence, l'information utile à l'étape c). L'optimisation à l'étape c), avec le modèle thermique initial et le filtre sélectionné initialement, peut conduire au constat que le bâtiment étudié présente une forte inertie thermique. Lorsqu'on recherche une valeur optimale pour un paramètre qui établit une relation entre la température intérieure du bâtiment étudié et un facteur d'influence comme la température extérieure, les valeurs réelles qui correspondent à des variations rapides de la température intérieure sont peu utiles. Les variations rapides de la température intérieure ne sont en effet que peu corrélées à l'évolution de la température extérieure, mais plus probablement dues à une fenêtre ouverte. Pour affiner la valeur de ce paramètre, il est donc utile de ne sélectionner que les valeurs réelles qui correspondent à des évolutions lentes de la température intérieure (filtrage du « bruit »).

De même, la méthode d'analyse peut être modifiée en fonction des résultats obtenus lors de l'étape c). Par exemple, une analyse de l'évolution de la température intérieure peut conduire à la conclusion que le bâtiment étudié comporte un plancher chauffant, comme expliqué ci-dessus. La température intérieure varie donc lentement sous l'effet d'une mise en marche du chauffage. La méthode d'analyse doit être choisie pour être précise sur les faibles dynamiques, c'est-à-dire de manière à être précise pour les valeurs réelles qui correspondent à des variations lentes de la température intérieure sous l'effet d'une modification du chauffage (variation du facteur d'influence). La méthode d'analyse est modifiée en conséquence

De préférence, la bibliothèque de modèles thermiques, ou de filtres, ou de méthodes d'analyse est construite à partir de données (valeurs réelles de facteurs d'influence, valeurs réelles de la température intérieure, évaluations de caractéristiques thermiques du bâtiment étudié, en particulier), obtenues par une pluralité de mises en œuvre d'un procédé selon l'invention.

De préférence, le procédé est mis en œuvre plus de 10 fois, plus de 100 fois, plus de 500 fois, plus de 1000 fois, plus de 5000 fois, plus de 10 000 fois avec des bâtiments différents, et les données ainsi recueillies sont enregistrées dans la bibliothèque.

De préférence, les données relatives à un modèle thermique et/ou à un filtre et/ou à une méthode d'analyse enregistrées dans la bibliothèque sont associées, dans ladite bibliothèque, à des caractéristiques thermiques du bâtiment, de préférence au moins en partie obtenues au moyens de questionnaires.

De préférence encore, la bibliothèque s'enrichit à chaque utilisation d'un procédé selon l'invention. De préférence, les performances de modèles thermiques et/ou des filtres et/ou des méthodes d'analyse des bibliothèques sont comparées les unes aux autres afin de sélectionner les modèles thermiques et/ou les filtres et/ou les méthodes d'analyse, respectivement, les plus performants.

L'accumulation des données permet avantageusement de disposer de modèles de plus en plus précis.

Dans un mode de réalisation, le choix d'un modèle thermique initial, d'un filtre ou d'une méthode d'analyse résulte d'une analyse, de préférence par le module de traitement, de la correspondance des différents modèles thermiques, filtres et méthodes d'analyse, respectivement, disponibles dans les bibliothèques avec des données mesurées ou évaluées pour le bâtiment étudié (valeurs réelles de facteurs d'influence, valeurs réelles de la température intérieure, évaluation de caractéristiques thermiques du bâtiment étudié, en particulier).

La correspondance est de préférence évaluée au moyen de règles adaptées pour fournir un « score », pour chaque modèle thermique, filtre ou méthode d'analyse, respectivement, disponible dans les bibliothèques, en fonction desdites données.

Dans un mode de réalisation, les règles sont établies de manière théorique, de préférence en fonction des lois de la thermique.

La recherche du modèle thermique initial et/ou filtre et/ou méthode d'analyse peut être effectuée par dichotomie.

La recherche du nouveau modèle thermique initial et/ou filtre et/ou méthode d'analyse dans la bibliothèque correspondante peut être effectuée au moyen d'un réseau de neurones, en particulier d'un réseau bayésien.

De préférence, on utilise un réseau de neurones, de préférence un réseau bayésien, prenant en compte l'ensemble des caractéristiques thermiques connues, des valeurs des paramètres possibles et des réponses possibles aux questionnaires. Les probabilités rentrées dans ce réseau de neurones ou réseau bayésien sont modifiées à chaque utilisation antérieure du procédé. Elles s'affinent donc progressivement.

Le réseau de neurones ou réseau bayésien permet alors, en prenant en compte les valeurs réelles de facteurs d'influence et/ou les valeurs réelles de la température intérieure et/ou les évaluations de caractéristiques thermiques du bâtiment étudié, d'identifier le modèle thermique initial et/ou le filtre et/ou la méthode d'analyse qui donnera probablement la meilleure modélisation du comportement thermique du bâtiment.

Dans un mode de réalisation, un utilisateur peut influencer, voire forcer le choix du modèle thermique et/ou du filtre et/ou de la méthode d'analyse.

De préférence cependant, le module de traitement effectue le choix automatiquement, c'est-à-dire sans intervention humaine.

Dans un mode de réalisation, si le meilleur score pour l'ensemble des modèles thermiques, filtres, ou méthodes d'analyse de la bibliothèque est inférieur à une valeur de seuil prédéterminée, le choix du modèle thermique, du filtre ou de la méthode d'analyse, respectivement, est aléatoire.

L'étape d) permet par une évolution dynamique et rapide du modèle thermique initial et/ou du filtre et/ou de la méthode d'analyse utilisé à l'étape e).

**A l'étape e),** le modèle est utilisé pour analyser le comportement du bâtiment en réaction à des évolutions de facteurs d'influence et/ou de caractéristiques thermiques du bâtiment, par exemple résultant d'une modification de l'isolation, et/ou pour évaluer lesdites caractéristiques thermiques.

L'étape e) peut être réalisée à tout instant après l'analyse d'au moins un dit ensemble de valeurs réelles. En particulier, elle peut être réalisée alors que l'optimisation est encore en cours. Le modèle thermique utilisé est alors le meilleur modèle obtenu jusque-là.

De préférence, un rapport exposant les résultats de l'étape e) est généré. Un « moteur de règles » peut être mis en œuvre à cet effet.

Le rapport peut comporter un diagnostic exposant

- l'environnement du bâtiment, en particulier l'environnement urbain ou l'exposition au vent ou au soleil ;
- une évaluation de la résistance thermique globale et/ou de l'efficacité des menuiseries et/ou des volets et/ou du chauffage et/ou de la ventilation et/ou des apports de chaleur interne (cuisson, appareils ménagers, consommations de veille des appareils électroniques, par exemple) et/ou du thermostat.

Le rapport peut comporter des préconisations, notamment pour :

- isoler ou renforcer l'isolation en des emplacements déterminés du bâtiment, par exemple changer les volets ;
- modifier le chauffage, par exemple en préconisant des réglages de la puissance de la chaudière et/ou des durées et/ou des moments du chauffage ;
- préconiser des changements de comportement, par exemple sur la ventilation et/ou l'ouverture des volets et/ou l'aération naturelle, et/ou des modifications dans l'emplacement du thermostat ;

- préconiser l'installation de capteurs et/ou de régulateurs pour affiner le modèle ;
- préconiser l'installation de systèmes de contrôle, notamment de contrôle automatique, pour gérer plus efficacement les consommateurs d'énergie et/ou les moyens isolant, comme les volets ;
- fournir des informations facilitant la mise en œuvre des préconisations, comme des adresses de prestataire et/ou des fiches techniques et/ou des coûts à prévoir ;
- préconiser des comportements en cohérence avec les variations des facteurs d'influence, par exemple adapter sa tenue vestimentaire à la température extérieure.

Dans un mode de réalisation, le module de traitement peut commander la chaudière (commande C sur la figure 1) et/ou les volets et/ou la VMC en conséquence.

En fonction de la complexité du modèle, les préconisations peuvent être plus ou moins précises. Par exemple, si le modèle utilise la direction du vent comme facteur d'influence, il est possible de préconiser des travaux d'isolation spécifiquement sur une façade déterminée.

Comme cela apparaît clairement à présent, l'invention fournit un procédé permettant d'obtenir un modèle thermique précis et faible du comportement thermique d'un bâtiment.

En particulier, les modifications à l'étape d), en particulier les modifications des périodes d'analyse et les changements de méthode d'analyse pour évaluer les modifications à apporter aux valeurs des paramètres du modèle, autorisent des « ruptures » dans l'optimisation. Ces ruptures permettent avantageusement d'améliorer le modèle thermique.

Il en résulte un diagnostic fiable et précis, et, de préférence, des préconisations bien adaptées à ce bâtiment.

En particulier, dans un mode de réalisation, l'optimisation n'est jamais arrêtée, de sorte que le modèle thermique s'améliore en permanence et/ou s'adapte à toute évolution du bâtiment ou de son environnement, par exemple du fait d'un changement dans l'isolation thermique du bâtiment.

**Revendications**

1. Procédé de détermination d'un diagnostic thermique par la mesure d'une température intérieure (Ti) d'un bâtiment (10), le procédé comportant les étapes successives suivantes :

   a) choix d'un modèle thermique initial établissant, au moyen d'un ensemble de paramètres, une relation théorique entre ladite température intérieure et un ensemble de facteurs d'influence (Fi) de ladite température intérieure ;
   b) détermination d'un ensemble de valeurs réelles de ladite température intérieure et desdits facteurs d'influence ;
   c) optimisation des paramètres du modèle thermique initial par analyse, au moyen d'une méthode d'analyse, dudit ensemble de valeurs réelles, optionnellement filtrées au moyen d'un filtre ;
   d) en fonction d'une fonction d'évaluation, modification dudit modèle thermique initial et reprise à l'étape c) ou poursuite à l'étape e) ;
   e) utilisation du modèle thermique obtenu pour réaliser un diagnostic thermique, procédé dans lequel, à l'étape d), la modification du modèle thermique initial résulte d'une comparaison du modèle thermique initial avec un ou plusieurs modèles thermiques disponibles dans des bibliothèques de modèles thermiques auxquels sont associés des caractéristiques du bâtiment de référence.

2. Procédé selon la revendication précédente, dans lequel la modification à l'étape d) dépend

   - de la valeur et/ou de l'évolution temporelle de la valeur d'un ou plusieurs paramètres ; et/ou
   - d'un score représentant la correspondance des valeurs des paramètres du modèle initial optimisé à l'étape c) avec lesdites valeurs réelles ; et/ou
   - de l'ensemble de valeurs réelles utilisé à l'étape c) ; et/ou
   - du modèle thermique initial.

3. Procédé selon l'une quelconque des revendications précédentes, dans lequel l'étape d) comprend, en fonction de la fonction d'évaluation, la modification dudit modèle thermique initial et la modification du filtre et/ou de la méthode d'analyse et la reprise à l'étape c) ou la poursuite à l'étape e), et dans lequel, à l'étape d), la modification du modèle thermique initial et du filtre et/ou de la méthode d'analyse résulte d'une comparaison du modèle thermique initial et du filtre et/ou de la méthode d'analyse avec un ou plusieurs modèles thermiques et filtres et/ou méthodes d'analyse, respectivement, disponibles dans des bibliothèques de modèles thermiques, de filtres et de méthodes d'analyse, respectivement, auxquels sont associés des caractéristiques du bâtiment de référence.

4. Procédé selon la revendication précédente, dans lequel ladite comparaison s'effectue par comparaison

   - d'une ou plusieurs caractéristiques thermiques du bâtiment étudié, évaluées ou mesurées, et/ou
   - d'une ou plusieurs valeurs réelles de facteurs d'influence et/ou valeurs réelles de la température intérieure mesurées pour le bâtiment étudié, et/ou
   - d'une ou plusieurs évolutions de valeurs réelles de facteurs d'influence et/ou de valeurs réelles de la température intérieure mesurées pour le bâtiment étudié avec
   - une ou plusieurs caractéristiques thermiques, et/ou
   - une ou plusieurs plages de valeurs de facteurs d'influence et/ou de valeurs de température intérieure, et/ou
   - une ou plusieurs plages d'évolution de valeurs de facteurs d'influence et/ou de valeurs de température intérieure,
   relatives à un bâtiment de référence caractérisant chaque modèle thermique et/ou filtre et/ou méthode d'analyse desdites bibliothèques.

5. Procédé selon l'une quelconque des deux revendications immédiatement précédentes, dans lequel, la bibliothèque de modèles thermiques, ou de filtres, ou de méthodes d'analyse est construite à partir de données obtenues par une pluralité de mises en œuvre d'un procédé selon l'une quelconque des revendications précédentes.

6. Procédé selon l'une quelconque des revendications précédentes, dans lequel, à l'étape d), la modification du modèle thermique initial et/ou du filtre et/ou de la méthode d'analyse résulte d'une comparaison du modèle thermique initial et/ou du filtre et/ou de la méthode d'analyse avec un réseau de neurones établi à partir de données obtenues par une pluralité de mises en œuvre d'un procédé selon l'une quelconque des revendications précédentes.

7. Procédé selon l'une quelconque des revendications précédentes, dans lequel, à l'étape b) et/ou à l'étape d), les valeurs réelles de la température intérieure du bâtiment et de facteurs d'influence dudit ensemble sont mesurées dans une période d'analyse pendant laquelle tous les facteurs d'influence sauf un, dit « facteur d'influence actif », sont sensiblement constants.

8. Procédé selon la revendication immédiatement précédente, dans lequel l'étape c) est exécutée plusieurs fois, chaque exécution étant réalisée à partir d'un ensemble de valeurs réelles de la température intérieure du bâtiment et des facteurs d'influence mesurées dans une période d'analyse pendant laquelle tous les facteurs d'influence sauf un, dit « facteur d'influence actif », sont sensiblement constants pendant les douze heures précédant le début de ladite période d'analyse, les facteurs d'influence actifs ayant été successivement analysés du fait de l'exécution répétée de l'étape c) comportant au moins deux facteurs d'influence différents.

9. Procédé selon la revendication immédiatement précédente, les facteurs d'influence actifs ayant été successivement analysés du fait de l'exécution répétée de l'étape c) comportant au moins deux facteurs d'influence différents parmi la température extérieure, la vitesse du vent, l'orientation du vent, l'ensoleillement, la pression atmosphérique, l'humidité, la présence d'occupants dans le bâtiment, la puissance de chauffage et l'état de fonctionnement du système de chauffage.

10. Procédé selon l'une quelconque des revendications précédentes, dans lequel, à l'étape b), au moins une partie des facteurs d'influence est évaluée au moyen de réponses à au moins un questionnaire soumis à des occupants dudit bâtiment, un questionnaire étant de préférence soumis accompagné d'informations résultant d'une mise en œuvre antérieure dudit procédé.

11. Procédé selon l'une quelconque des revendications précédentes, dans lequel, à l'étape d), la modification de la méthode d'analyse est un choix dans le groupe constitué par l'identification, les statistiques, la méthode des moindres carrés, linéaire ou non, le filtre de Kalman, le filtre particulaire, les réseaux de neurones artificiels et le problème inverse.

12. Procédé selon l'une quelconques des revendications précédentes, dans lequel, à l'étape d), la fonction d'évaluation impose au moins une reprise à l'étape c).

13. Procédé selon l'une quelconques des revendications précédentes, dans lequel un ou plusieurs cycles c)-d) sont effectués avec

   - les valeurs des caractéristiques thermiques du bâtiment recueillies avec un premier questionnaire transmis à des occupants du bâtiment, et
- les valeurs réelles de moins de 5 facteurs d'influence, mesurées pendant une période d'analyse inférieure à un mois.

**14.** Procédé selon l'une quelconque des revendications précédentes, dans lequel, à l'étape e), on génère un rapport comportant un diagnostic exposant

- l'environnement du bâtiment, en particulier l'environnement urbain ou l'exposition au vent ou au soleil ; et/ou
- une évaluation de la résistance thermique globale et/ou de l'efficacité des menuiseries et/ou des volets et/ou du chauffage et/ou de la ventilation et/ou des apports de chaleur internes et/ou du thermostat ;
et/ou des préconisations pour :
- isoler ou renforcer l'isolation en des emplacements déterminés du bâtiment; et/ou
- modifier le chauffage; et/ou
- préconiser des changements de comportement et/ou des modifications dans l'emplacement du thermostat ; et/ou
- préconiser l'installation de capteurs et/ou de régulateurs pour affiner le modèle ; et/ou
- préconiser l'installation de systèmes de contrôle, pour gérer plus efficacement les consommateurs d'énergie et/ou les moyens isolants; et/ou
- fournir des informations facilitant la mise en œuvre des préconisations.

**15.** Dispositif de détermination d'un diagnostic thermique par la mesure d'une température intérieure d'un bâtiment, ledit dispositif comportant :

- un thermomètre (16) disposé pour mesurer, à tout instant t, une température intérieure Ti($t$) à l'intérieur d'un bâtiment (10),
- un ensemble de capteurs (18$_i$) destinés chacun à mesurer, à tout instant t, un facteur d'influence de ladite température intérieure,
- un module de traitement (22) comportant un programme d'ordinateur comprenant des instructions de code de programme pour l'exécution d'un procédé selon l'une quelconque des revendications précédentes, lorsque ledit programme est exécuté par un ordinateur.

**Patentansprüche**

**1.** Verfahren zur Erstellung einer thermischen Diagnose durch die Messung einer Innentemperatur (Ti) eines Gebäudes (10), wobei das Verfahren die folgenden aufeinanderfolgenden Schritte beinhaltet:

a) Auswählen eines ursprünglichen thermischen Modells, das anhand einer Reihe von Parametern eine theoretische Beziehung zwischen der Innentemperatur und einer Reihe von Einflussfaktoren (Fi) der Innentemperatur herstellt;
b) Erstellen einer Reihe von Istwerten der Innentemperatur und der Einflussfaktoren;
c) Optimieren der Parameter des ursprünglichen thermischen Modells durch Analyse, anhand einer Analysemethode, der Reihe von Istwerten, die optional anhand eines Filters gefiltert werden;
d) in Abhängigkeit von einer Bewertungsfunktion Ändern des ursprünglichen thermischen Modells und Wiederaufnehmen im Schritt c) oder Fortsetzen im Schritt e);
e) Verwenden des erhaltenen thermischen Modells zum Realisieren einer thermischen Diagnose,
Verfahren, bei dem in Schritt d) das Ändern des ursprünglichen thermischen Modells aus einem Vergleich des ursprünglichen thermischen Modells mit einem oder mehreren verfügbaren thermischen Modellen in thermischen Modellbibliotheken resultiert, denen Eigenschaften des Referenzgebäudes zugeordnet sind.

**2.** Verfahren nach dem vorstehenden Anspruch, wobei die Änderung in Schritt d) abhängt

- von dem Wert und/oder der zeitlichen Entwicklung des Wertes eines oder mehrerer Parameter; und/oder
- von einer Punktezahl, die die Entsprechung der Werte der Parameter des optimierten ursprünglichen Modells in Schritt c) mit den Istwerten darstellt; und/oder
- von der Reihe von in Schritt c) verwendeten Istwerten; und/oder
- vom ursprünglichen thermischen Modell.

3. Verfahren nach einem der vorstehenden Ansprüche, wobei der Schritt d) in Abhängigkeit von der Bewertungsfunktion das Ändern des ursprünglichen thermischen Modells und das Ändern des Filters und/oder der Analysemethode und das Wiederaufnehmen im Schritt c) oder Fortsetzen im Schritt e) umfasst, und wobei in Schritt d) das Ändern des ursprünglichen thermischen Modells und des Filters und/oder der Analysemethode aus einem Vergleich des ursprünglichen thermischen Modells und des Filters und/oder der Analysemethode mit jeweils einem oder mehreren thermischen Modellen und Filtern und/oder Analysemethoden, die jeweils in den Bibliotheken von thermischen Modellen, Filtern und Analysemethoden verfügbar sind, resultiert, denen Eigenschaften des Referenzgebäudes zugeordnet sind.

4. Verfahren nach dem vorstehenden Anspruch, wobei der Vergleich erfolgt, durch Vergleichen

   - von einer oder mehreren thermischen Eigenschaften des untersuchten Gebäudes, die geschätzt oder gemessen werden, und/oder
   - von einem oder mehreren Istwerten von Einflussfaktoren und/oder gemessenen Istwerten der Innentemperatur für das untersuchte Gebäude, und/oder
   - von einer oder mehreren Entwicklungen von Istwerten von Einflussfaktoren und/oder von gemessenen Istwerten der Innentemperatur für das untersuchte Gebäude
   mit
   - einer oder mehreren thermischen Eigenschaften, und/oder
   - einem oder mehreren Wertebereichen von Einflussfaktoren und/oder Innentemperaturwerten, und/oder
   - einem oder mehreren Entwicklungsbereichen von Einflussfaktorwerten und/oder Innentemperaturwerten,
   in Bezug auf ein Referenzgebäude, das jedes thermische Modell und/oder Filter und/oder Analysemethode der Bibliotheken kennzeichnet.

5. Verfahren nach einem der beiden unmittelbar vorstehenden Ansprüche, wobei die thermische Modell-, Filter- oder Analysemethodenbibliothek aus Daten aufgebaut ist, die aus einer Vielzahl von Umsetzungen eines Verfahrens nach einem der vorstehenden Ansprüche erhalten werden.

6. Verfahren nach einem der vorstehenden Ansprüche, wobei im Schritt d) das Ändern des ursprünglichen thermischen Modells und/oder des Filters und/oder der Analysemethode aus einem Vergleich des ursprünglichen thermischen Modells und/oder des Filters und/oder der Analysemethode mit einem neuronalen Netzwerk resultiert, das aus den Daten gegründet wird, die aus einer Vielzahl von Umsetzungen eines Verfahrens nach einem der vorstehenden Ansprüche erhalten werden.

7. Verfahren nach einem der vorstehenden Ansprüche, wobei in Schritt b) und/oder in Schritt d) die Istwerte der Innentemperatur des Gebäudes und von Einflussfaktoren der Reihe über einen Analysezeitraum hinweg gemessen werden, in dem alle Einflussfaktoren, mit Ausnahme von einem, "aktiver Einflussfaktor" genannt, im Wesentlichen konstant sind.

8. Verfahren nach dem unmittelbar vorstehenden Anspruch, wobei der Schritt c) mehrmals ausgeführt wird, wobei jede Ausführung ausgehend von einer Reihe von Istwerten der Innentemperatur des Gebäudes und den gemessenen Einflussfaktoren in einem Analysezeitraum realisiert wird, in dem alle Einflussfaktoren, mit Ausnahme von einem, "aktiver Einflussfaktor" genannt, zwölf Stunden vor Beginn des Analysezeitraums im Wesentlichen konstant sind, wobei die aktiven Einflussfaktoren, die nacheinander infolge der wiederholten Ausführung des Schrittes c) analysiert worden sind, mindestens zwei unterschiedliche Einflussfaktoren beinhalten.

9. Verfahren nach dem unmittelbar vorstehenden Anspruch, wobei die aktiven Einflussfaktoren, die nacheinander infolge der wiederholten Ausführung des Schrittes c) analysiert worden sind, mindestens zwei unterschiedliche Einflussfaktoren beinhalten aus der Außentemperatur, der Windgeschwindigkeit, der Windrichtung, der Sonneneinstrahlung, dem atmosphärischen Druck, der Feuchtigkeit, der Präsenz von Bewohnern im Gebäude, der Heizleistung, und dem Betriebszustand des Heizungssystems.

10. Verfahren nach einem der vorstehenden Ansprüche, wobei in Schritt b) mindestens ein Teil der Einflussfaktoren anhand von Antworten auf einen Fragebogen geschätzt wird, der den Bewohnern des Gebäudes vorgelegt wird, wobei ein Fragebogen vorzugsweise in Begleitung von Informationen vorgelegt wird, die aus einer früheren Umsetzung des Verfahrens resultieren.

11. Verfahren nach einem der vorstehenden Ansprüche, wobei in Schritt d) das Ändern der Analysemethode eine Auswahl aus der Gruppe ist, die durch die Identifizierung, die Statistiken, der Methode der kleinsten Quadrate, linear oder nicht linear, dem Kalman-Filter, dem Teilchenfilter, den künstlichen neuronalen Netzwerken und dem inversen Problem gebildet wird.

12. Verfahren nach einem der vorstehenden Ansprüche, wobei in Schritt d) die Schätzfunktion mindestens eine Wiederaufnahme in Schritt c) verlangt.

13. Verfahren nach einem der vorstehenden Ansprüche, wobei ein oder mehrere Zyklen c)-d) ausgeführt werden mit

- den Werten der thermischen Eigenschaften des Gebäudes, die mit einem ersten Fragebogen erhoben werden, der den Bewohnern des Gebäudes übermittelt wird, und
- den Istwerten von weniger als 5 Einflussfaktoren, die während eines Analysezeitraums von weniger als einem Monat gemessen werden.

14. Verfahren nach einem der vorstehenden Ansprüche, wobei in Schritt e) ein Bericht generiert wird, der eine Diagnose beinhaltet, die Folgendes offen legt

- die Umgebung des Gebäudes, insbesondere die städtische Umgebung oder die Aussetzung von Wind und Sonne; und/oder
- eine Schätzung der globalen thermischen Beständigkeit und/oder der Effizienz der Fenster und Türen und/oder der Fensterläden und/oder der Heizung und/oder der Lüftung und/oder der internen Wärmezuführungen und/oder des Thermostaten;
und/oder Empfehlungen zum:
- Isolieren oder Verstärken der Isolierung an bestimmten Stellen des Gebäudes; und/oder
- Ändern der Heizung; und/oder
- Empfehlen von Verhaltensänderungen und/oder Änderungen des Standortes des Thermostaten; und/oder
- Empfehlen der Installation von Sensoren und/oder Reglern zur Verfeinerung des Modells; und/oder
- Empfehlen der Installation von Kontrollsystemen, um die Energieverbraucher und/oder die Isoliermittel effizienter zu verwalten; und/oder
- Bereitstellen von Informationen, die die Umsetzung der Empfehlungen erleichtern.

15. Vorrichtung zur Erstellung einer thermischen Diagnose durch die Messung einer Innentemperatur eines Gebäudes, wobei die Vorrichtung beinhaltet:

- ein Thermometer (16), das angeordnet ist, um zu jedem Zeitpunkt $t$ eine Temperatur Ti($t$) im Inneren des Gebäudes (10) zu messen,
- eine Reihe von Sensoren (18$_i$), die jeweils dazu bestimmt sind, zu jedem Zeitpunkt $t$ einen Einflussfaktor der Innentemperatur zu messen,
- ein Verarbeitungsmodul (22), das ein Computerprogramm beinhaltet, das Programmcodeanweisungen zur Ausführung eines Verfahrens nach einem der vorstehenden Ansprüche umfasst, wenn das Programm durch einen Computer ausgeführt wird.


**Claims**

1. A method for determining a thermal diagnosis through the measurement of an inside temperature (Ti) of a building (10), the method including the following successive steps:

a) selection of an initial thermal model, establishing, by means of a set of parameters, a theoretical relationship between said inside temperature and a set of influencing factors (Fi) of said inside temperature;
b) determination of a set of actual values of said inside temperature and of said influencing factors;
c) optimization of the parameters of the initial thermal model through the analysis, by means of an analysis method, of said set of actual values, optionally filtered by means of a filter;
d) depending on an assessment function, modification of said initial thermal model and return to step c) or resumption at step e);
e) use of the obtained thermal model to carry out a thermal diagnosis,
in which method, at step d), the modification of the initial thermal model results from a comparison of the initial thermal model with one or several thermal model(s) available in thermal models libraries to which characteristics of the reference building are associated.

2. The determination method according to the preceding claim, wherein the modification at step d) depends on:

- the value and/or the time evolution of the value of one or several parameter(s); and
- a score representing the correspondence of the values of the parameters of the initial model optimized at step c) with said actual values; and/or
- the set of actual values used at step c); and/or
- the initial thermal model.

3. The determination method according to any one of the preceding claims, wherein step d) comprises, depending on the assessment function, the modification of said initial thermal model and the modification of the filter and/or of the analysis method and the return to step c) or the resumption at step e), and wherein, at step d), the modification of the initial thermal model and of the filter and/or of the analysis method results from a comparison of the initial thermal model and of the filter and/or of the analysis method with one or several thermal model(s) and filter(s) and/or analysis method(s), respectively, available in thermal models, filters and analysis methods libraries, respectively, to which characteristics of the reference building are associated.

4. The determination method according to the preceding claim, wherein said comparison is performed by comparison of:

- one or several thermal characteristic(s) of the studied building, assessed or measured, and/or
- one or several actual value(s) of influencing factors and/or actual values of the inside temperature measured for the studied building, and/or
- one or several evolution(s) of actual values of influencing factors and/or of actual values of the inside temperature measured for the studied building with:
- one or several thermal characteristic(s), and/or
- one or several range(s) of influencing factors values and/or of inside temperature values, and/or
- one or several range(s) of evolution of influencing factors values and/or of inside temperature values,
relating to a reference building characterizing each thermal model and/or filter and/or analysis method of said libraries.

5. The determination method according to any one of the two immediately preceding claims, wherein, the thermal models, or filters, or analysis methods library is built from data obtained through a plurality of implementations of a method according to any one of the preceding claims.

6. The determination method according to any one of the preceding claims, wherein, at step d), the modification of the initial thermal model and/or of the filter and/or of the analysis method results from a comparison of the initial thermal model and/or of the filter and/or of the analysis method with a neural network established from data obtained through a plurality of implementations of a method according to any one of the preceding claims.

7. The determination method according to any one of the preceding claims, wherein, at step b) and/or at step d), the actual values of the inside temperature of the building and of influencing factors of said set are measured over an analysis period during which all of the influencing factors except one, called « active influencing factor », are substantially constant.

8. The determination method according to the immediately preceding claim, wherein step c) is executed several times, each execution being carried out from a set of actual values of the inside temperature of the building and of the influencing factors measured over an analysis period during which all of the influencing factors except one, called « active influencing factor », are substantially constant during the twelve hours preceding the beginning of said analysis period, the active influencing factors having been successively analyzed through the repeated execution of step c) including at least two different influencing factors.

9. The determination method according to the immediately preceding claim, the active influencing factors having been successively analyzed through the repeated execution of step c) including at least two different influencing factors amongst the outside temperature, the wind speed, the wind direction, the insolation, the atmospheric pressure, the humidity, the presence of occupants in the building, the heating power and the operating status of the heating system.

10. The determination method according to any one of the preceding claims, wherein, at step b), at least part of the influencing factors is assessed by means of answers to at least one survey submitted to occupants of said building, a survey being preferably submitted together with information resulting from a prior implementation of said method.

11. The determination method according to any one of the preceding claims, wherein, at step d), the modification of the analysis method is a selection from the group constituted by identification, statistics, least squares method, whether linear or not, Kalman filter, particle filter, artificial neural networks and inverse problem.

12. The determination method according to any one of the preceding claims, wherein, at step d), the assessment function imposes at least one return to step c).

13. The determination method according to any one of the preceding claims, wherein one or several cycle(s) c)-d) is/are performed with:

- the values of the thermal characteristics of the building collected with a first survey transmitted to occupants of the building, and
- the actual values of less than 5 influencing factors, measured during an analysis period shorter than one month.

14. The determination method according to any one of the preceding claims, wherein, at step e), a report is generated including a diagnosis setting out:

- the environment of the building, in particular the urban environment or the exposure to wind or to the Sun; and/or
- an assessment of the overall thermal resistance and/or of the efficiency of the joineries and/or of the shutters and/or of the heating and/or of the ventilation and/or of the internal heat supplies and/or of the thermostat; and/or recommendations to:
- insulate or enhance the insulation at specific locations of the building; and/or
- modify the heating; and/or
- recommend behavioral changes and/or modifications in the location of the thermostat; and/or
- recommend the installation of sensors and/or regulators to refine the model; and/or
- recommend the installation of monitoring systems, to manage the energy consumers and/or the insulating means more efficiently; and/or
- supply information facilitating the implementation of the recommendations.

15. A device for determining a thermal diagnosis through the measurement of an inside temperature of a building, said device including:

- a thermometer (16) disposed so as to measure, at any time $t$, an inside temperature Ti($t$) inside a building (10),
- a set of sensors (18$_i$) each intended to measure, at any time $t$, an influencing factor of said inside temperature,
- a processing module (22) including a computer program comprising program code instructions for the execution of a method according to any one of the preceding claims, when said program is executed by a computer.

Fig. 1

%tc

Fig. 3

Fig. 2

## RÉFÉRENCES CITÉES DANS LA DESCRIPTION

**Documents brevets cités dans la description**

- WO 2012152939 A1

**Littérature non-brevet citée dans la description**

- **BRONSHTEIN et al.** Handbook-Mathematics. Springer-Verlag Berlin and Heidelberg GmbH & Co. K
- **BRANKO RISTIC et al.** Beyond-Kalman-Filter-Particle-Applications. Artech Print on Demand, 31 Janvier 2004
- **ALBERT TARANTOLA.** Inverse ProblemTheory and Methods for Model parameter estimation. Society for Industrial and Applied Mathematics